# EUROPÄISCHE PATENTSCHRIFT

(11) **EP 0 535 544 B1**
(45) Veröffentlichungstag und Bekanntmachung des Hinweises auf die Patenterteilung: **06.03.1996**
(21) Anmeldenummer: 92116403.4
(22) Anmeldetag: 24.09.1992
(51) Int. Cl.: C05F 7/00, C05F 17/00

(54) **Verfahren zur Abwasseraufbereitung**
Process for treating sewage
Procédé de traitement des eaux d'égout

(30) Priorität: 04.10.1991 CS 3033/91
(43) Veröffentlichungstag der Anmeldung: 07.04.1993
(73) Patentinhaber: MANEKO, spol. s r.o., CS-160 00 Praha 6 (CS)
(72) Erfinder: Mostecky, Jiri, Praha 6 (CS)
(74) Vertreter: Patentanwälte Beetz - Timpe - Siegfried Schmitt-Fumian - Mayr

(56) Entgegenhaltungen:
- EP-A- 0 153 282
- AU-B- 66 200
- CH-A- 605 470
- FR-A- 2 222 332

## Beschreibung

Die Erfindung betrifft ein Verfahren zur Aufbereitung von nichtgereinigten Abwassern, die durch gelöste oder dispergierte organische oder anorganische Stoffe verunreinigt sind, das zu festen Produkten führt.

Abwässer, die durch gelöste oder dispergierte organische oder anorganische Stoffe verunreinigt sind, fallen auf den verschiedensten Gebieten an, und zwar in sehr hohen Mengen, so daß die Abwasseraufbereitung und -beseitigung zu den größten ökologischen, technischen und wirtschaftlichen Problemen gehört. Die Hauptmenge solcher Abwässer stellen die verschiedensten kommunalen Abwässer dar. Weitere Produzenten für derart belastete Abwässer sind landwirtschaftliche Betriebe sowie Industrien, insbesondere die Nahrungsmittelindustrie.

Die organischen Verunreinigungen solcher Abwässer bestehen hauptsächlich aus Eiweißstoffen, Sacchariden und Fetten. Von den anorganischen Stoffen sind insbesondere die Alkalimetallsalze zu nennen, besonders die Natriumsalze und insbesondere Natriumchlorid, die zu häufigsten Verunreinigungen gehören.

Ein Prinzip, das derzeit bei der Beseitigung verunreinigter Abwässer angewandt wird, besteht in der physikalischen Trennung in eine feste und eine flüssige Phase. Diese Trennung erfolgt üblicherweise durch leistungsfähige Zentrifugen. Während der feste Anteil, sofern er keine toxischen Stoffe enthält, verhältnismäßig leicht zu verarbeiten und zu beseitigen ist, z. B. durch Kompostierung, ist die Verarbeitung des flüssigen Anteils stets mit erheblichen technischen und wirtschaftlichen Problemen verbunden. Der flüssige Anteil liegt gegenüber dem festen Anteil in einer vielfach größeren Menge vor. Dies bringt entsprechend hohe Investitionen bei Abwasserreinigungsanlagen mit sich. Das Hauptprinzip der Reinigung von Abwässern von organischen Verbindungen ist die mikrobiologische Verarbeitung des flüssigen Anteils durch Vergärung mit einem Gemisch von Mikroorganismen, die unter aeroben oder anaeroben Bedingungen die organischen Stoffe für ihren Stoffwechsel und ihre Vermehrung verbrauchen. Dabei bilden sich entsprechende Schlämme, die entwässert und weiterverarbeitet werden müssen. Darüber hinaus arbeiten die mikrobiologischen Verfahren der aeroben Abwasserreinigung nur bei Temperaturen zuverlässig, die über 5 bis 8 °C liegen.

Dies bringt den weiteren Nachteil mit sich, daß die aerobe Abwasserreinigung in der kalten Jahreszeit wenig wirksam ist, so daß entsprechend lange Verarbeitungszeiten und damit hohe Anlagenvolumina zur Erzielung einer Mindestreinigung erforderlich sind. Darüber hinaus kann es unter diesen Umständen leicht zu ökologischen Havarien kommen. Die anaerobe Vergärung von Abwässern arbeitet zwar auch in der kalten Jahreszeit zuverlässig, jedoch sind die Investitionskosten für die anaerobe Abwasseraufbereitung im Vergleich mit den Kosten aerob arbeitender Systeme wesentlich höher.

Durch die biologische Abwasserreinigung werden jedoch anorganische Stoffe nicht beseitigt. Von den zumeist anwesenden Anionen können lediglich die Sulfate in einigermaßen wirtschaftlicher Weise abgetrennt werden, etwa durch Fällung als Calciumsulfat, während die Chloride und Nitrate, welche die Hauptmenge der weiteren Anionen darstellen, praktisch nicht durch wirtschaftlich arbeitende Verfahren entfernt werden können. Damit wird der Salzgehalt der Gewässer in sehr umweltschädlicher Weise erhöht. Durch finanzielle Abgaben durch Verursacher oder Einleiter läßt sich dieses Problem selbstverständlich nicht lösen.

Generell ist zur Abwasserreinigungstechnologie festzustellen, daß sie unter Berücksichtigung der prinzipiell zur Verfügung stehenden Technologien und Apparate nicht dem sonst üblichen Standard entsprechend entwickelt ist.

Der Erfindung liegt die Aufgabe zugrunde, ein Verfahren zur Aufbereitung von nichtgereinigten Abwässern anzugeben, die durch gelöste und/oder dispergierte organische oder anorganische Stoffe verunreinigt sind, das zu im wesentlichen festen Produkten führt, die in einfacher und wirtschaftlicher Weise erhalten werden und möglichst weitgehend und günstig weiterverarbeitbar sein sollen.

Die Aufgabe wird anspruchsgemäß gelöst. Die abhängigen Ansprüche betreffen vorteilhafte Ausführungsformen der Erfindungskonzeption.

Das erfindungsgemäße Verfahren zur Aufbereitung von nichtgereinigten Abwässern, die durch gelöste oder dispergierte organische oder anorganische Stoffe verunreinigt sind, ist gemäß dem zugrundeliegenden Prinzip gekennzeichnet durch (A) Vermischen des Abwassers mit einem oder mehreren anorganischen oder organischen thixotropierenden Stoffen, vorzugsweise unter Homogenisierung, und (B) Sorption des Gemisches auf einem anorganischen oder organischen natürlichen oder synthetischen Sorptionsmittel, das von dem in Schnitt A eingesetzten thixotropierenden Mitteln verschieden ist, wobei das Gemisch aus Schritt A in einer massebezogenen Menge von 2 bis 12 Teilen auf 1 Teil des Sorptionsmittels eingesetzt wird.

Das Verfahren wird vorteilhaft so durchgeführt, daß das Gemisch auf einmal oder in mehreren Teilmengen mit dem Sorptionsmittel in Kontakt gebracht wird.

Es ist ferner vorteilhaft, das System während der Sorption in Schritt B bzw. zwischen den einzelnen Sorptionsoperationen zu belüften.

Nach einer weiteren vorteilhaften Ausführungsform wird dem Abwasser neben dem thixotropierenden Stoff in Schritt A eine Mischkultur von Mikroorganismen zugesetzt, vorteilhaft Belebtschlamm aus Kläranlagen. Durch diese Maßnahme wird eine anschließende Fermentation bzw. Vergärung des resultierenden aufbereiteten Abwasserprodukts erleichtert, wobei zugleich zusätzliche Biomasse entstehen kann.

Der Zusatz von Kulturen von Mikroorganismen zum Abwasser ist besonders dann vorteilhaft, wenn das Abwasser stark durch organische Stoffe verunreinigt ist, da hierdurch der biologische Abbau beschleunigt wird. Besonders günstig ist hierzu der Zusatz von Belebtschlamm aus Kläranlagen.

Das aus Schritt A resultierende aufbereitete Abwasser, das thixotropierende Stoffe enthält, wird in Schritt B auf dem Sorptionsmittel sorbiert, wobei das Massenverhältnis von zu sorbierendem Abwassergemisch zu Sorptionsmittel 2 : 1 bis 12 : 1 und vorteilhaft 8 : 1 bis 10 : 1 beträgt.

Als organische Materialien, die sich als thixotropierende Stoffe eignen und im gegebenen Fall auch weitere physikalische Eigenschaften des Abwassers verbessern, eignen sich im Rahmen der Erfindung beliebige anorganische oder organische Sorptionsmittel, insbesondere Polysaccharide und deren Derivate, vorzugsweise Stärke und Stärkederivate, Zellstoffderivate bzw. Cellulosederivate, wie Carboxymethylcellulose, Polyacrylsäurederivate und andere vergleichbare Stoffe sowie Sulfitablaugen. Durch die Verwendung von Sulfitablaugen werden auch wasserlösliche Zucker in das Abwasser eingeführt, die bei der Zellstoffherstellung durch das Sulfitverfahren anfallen, wodurch die Nährstoffmenge im Abwasser erhöht wird, was wiederum für die nachfolgende biologische Verarbeitung auf dem festen Substrat vorteilhaft ist. Die Zellstoff- bzw. Cellulosederivate, Stärkederivate, Polyacrylsäurederivate bzw. Polysaccharide führen zu einer besonders signifikant erhöhten Thixotropie des Abwassers.

Aufgrund der Thixotropierung des Abwassers bzw. der Erhöhung seiner Thixotropie wird erfindungsgemäß eine vielfach höhere Adhäsion auf den festen Sorptionsmitteln erzielt.

Die Aufbereitung des Abwassers in Schritt A kann ferner auch unter Verwendung anorganischer thixotropierender Stoffe erfolgen, die ebenfalls zu einer auch anderweitigen Verbesserung der physikalischen Eigenschaften führen können, insbesondere beispielsweise durch Zusatz von Bentoniten, Zeolithen, Tonen bzw. Lössen und vergleichbaren mineralischen Produkten. Auch Kraftwerksflugaschen sind für diesen Zweck gut geeignet. Alle diese Stoffe erhöhen ebenfalls die Adhäsion des aufbereiteten Abwassers am Sorptionsmittel.

Durch die Aufbereitung des Abwassers in Schritt A besitzt das Abwasser ein besonders hohes Sorptionsvermögen gegenüber festen organischen wie auch anorganischen Sorptionsmitteln. Die entsprechende Menge des aufbereiteten Abwassers kann auf einmal mit dem Sorptionsmittel in der entsprechenden Menge in Kontakt gebracht werden. Es hat sich im Rahmen der Erfindung jedoch als vorteilhaft erwiesen, das aufbereitete Abwasserprodukt in mehreren Teilmengen mit dem Sorptionsmittel umzusetzen, besonders günstig in 4 bis 5 Teilmengen. In diesem Fall wird die vorzugsweise durchgeführte Belüftung des Systems zwischen den einzelnen Sorptionsschritten durchgeführt. Zwischen jeder Dosierung wird dann das Gemisch aus dem aufbereiteten Abwasser und dem Sorptionsmittel gründlich gemischt, beispielsweise durch mechanische Mischeinrichtungen, mit denen eine gute Durchlüftung erzielt werden kann. Auf diese Weise wird ein Vorrat an absorbiertem bzw. gelöstem Sauerstoff erzeugt, der für die nachfolgende Vergärung zur Verfügung steht.

Die erfindungsgemäß eingesetzten festen Sorptionsmittel können organische oder anorganische Sorptionsmittel natürlichen oder synthetischen Ursprungs sein. Von den organischen Sorbentien haben sich natürliche Materialien wie Holzspäne, Getreidestroh, Maisstroh, Maisrispen, desintegrierte Holzmassen und Baumrinde besonders bewährt.

Zu geeigneten anorganischen Sorptionsmitteln gehören die Bentonite, Zeolithe, Tone und Lösse sowie Kraftwerksflugaschen. Die Sorptionsfähigkeit dieser anorganischen Materialien ist jedoch im Vergleich zu den organischen Sorptionsmitteln in den meisten Fällen geringer.

Als Sorptionsmittel können ferner auch desintegrierte feste Stadtabfälle verwendet werden, die Gemische organischer und anorganischer Verbindungen darstellen.

Nach dem Inkontaktbringen des Produkts aus Schritt A mit dem Sorptionsmittel in Schritt B resultiert ein festes bzw. im wesentlichen festes Sorptionsprodukt, das z. B. der Kompostierung zugeführt werden kann. Durch entsprechende mechanische Einrichtungen kann es in die Form üblicher Industriekomposte gebracht werden.

Die anschließende Vergärung des kompostierten Materials, das auch die von den Mikroorganismen gebildeten Produkte und die Biomasse der Mikroorganismen enthält, führt zu einem Endprodukt, das aufgrund der Vergärung der organischen Verunreinigungen des Abwassers und der vorliegenden Mikroorganismenkulturen und ihrer Produkte einen hervorragenden Pflanzennährboden bzw. ein hervorragendes Düngemittel darstellt. Das Vorliegen eines natürlichen Sorptionsmittels, das bei der Vergärung nach Kompostierung in den meisten Fällen auch mehr oder weniger stark verrottet, stellt einen weiteren Vorteil der Erfindung dar. Darüber hinaus ist ein wichtiger Vorteil der erfindungsgemäßen Verfahrensweise darin zu sehen, daß bei der Vergärung hohe Temperaturen von etwa 70 bis 75 °C erzielt werden, wodurch zum einen sämtliche pathogenen Keime zerstört werden und ein hygienisch absolut einwandfreier Kompost resultiert und zum andern auch alle im Produkt vorliegenden Pflanzensamen durch die Einwirkung der hohen Temperatur zerstört werden, wodurch das Produkt auch unkrautfrei ist.

Die Erfindung wird im folgenden anhand von Ausführungsbeispielen näher erläutert. Sofern nichts anderes angegeben ist, sind die Mengen- und Prozentangaben massebezogen.

### Beispiel 1

Ein Abwasser aus einer Großschweinehaltung mit einem Trockensubstanzgehalt von 5,3 % wurde mit 5 Teilen eingedickter Sulfitablauge vermischt. Nach Durchmischen wurde das erhaltene Gemisch im Verhältnis 7 : 1 auf Rapsstroh dosiert.

Die Gärung begann nach 27 h; nach 4 d hatte die Temperatur des Kompostes 73 °C erreicht. Nach 6 Wochen wurde der Kompost überschichtet; nach 2 d betrug die Temperatur innerhalb des überschichteten Kompostes 45 °C. Im Verlauf von 6 Wochen glich sich dann die Temperatur langsam der Umgebungstemperatur an.

Mit dem erhaltenen Kompost wurde ein für die Maisaussaat vorbereitetes Feld gedüngt. Der Maisertrag auf diesem Feld war um 35 % höher als auf einem Feld, das in herkömmlicher Weise mit NPK gedüngt worden war.

### Beispiel 2

Ein kommunales Abwasser mit einem Trockensubstanzgehalt von 1,35 % wurde mit oxidierter Stärke in einer Menge von 0,4 kg/m³ Abwasser vermischt. Das erhaltene viskose Gemisch wurde im Verhältnis 10 : 1 auf zerkleinertes Gerstenstroh dosiert.

Nach 3 Monaten Gärung war der erhaltene Kompost ausreichend verrottet und wurde zum Düngen von Heuhafer verwendet. Gegenüber einem Kontrollfeld war der erzielte Ertrag um 52 % höher.

### Beispiel 3

Ein Abwasser aus der Kartoffelchipproduktion mit einem Trockensubstanzgehalt von 1,8 % wurde durch Zusatz von Carboxymethylcellulose in einer Menge von 1 kg/m³ Abwasser verdickt. Das aufbereitete Abwasser wurde dann in einem Mengenverhältnis von 9 : 1 auf Buchenspäne dosiert.

Nach Beendigung der Vergärung wurde der erhaltene Kompost auseinandergezogen, worauf nacheinander 5 weitere Teile dieses Abwassers aufdosiert wurden; in diesen Fällen wurden als thixotropierende Stoffe 100 g Polyacrylamid und 5 kg Bentonit eingesetzt. Danach wurde das erhaltene Produkt wieder kompostiert. Die neuerliche Gärung setzte nach 5 d ein und war nach 2 weiteren Monaten beendet. Bei den Gärungsvorgängen kam es zu einem biologischen Abbau der Holzspäne, und es entstand ein Düngersubstrat, das in einen für die Blumenkohlproduktion vorgesehenen Boden eingebracht wurde. Die Blumenkohlernte lag 6 Tage früher als die Vergleichsernte, wobei der Durchmesser der Blumenkohlköpfe 8 bis 10 % größer war.

### Beispiel 4

Ein stärkehaltiges Abwasser, das Eiweißstoffe, mitgerissene Stärkekörner und Zellstoffasern enthielt, wurde mit Gülle aus einer Rinderhaltung im Verhältnis 1 : 1 vermischt. Nach Zugabe von Belebtschlamm wurde das Produkt mit desintegriertem Stadtabfall im Verhältnis 8 : 1 vermischt. Bei dem verwendeten desintegrierten Stadtabfall waren die organischen Anteile vorherrschend.

Der Kompost wurde nach der Vergärung zum Düngen von Mais verwendet, wobei der Ertrag gegenüber Kontrollversuchen um 41 % höher lag.

### Beispiel 5

Ein Abwasser aus einer Gerberei (Gerbstoffgerbung) wurde mit Zeolith vermischt, der in einer Menge von 10 kg/m³ Abwasser eingesetzt wurde. Das erhaltene Gemisch wurde mit Silagesaft versetzt, der mit 0,5 kg oxidierter Stärke/m³ eingedickt worden war. Nach gründlichem Vermischen wurde das erhaltene Produkt auf ein Gemisch von 85 Teilen Gerstenstroh und 15 Teilen Flugasche dosiert. Das resultierende Material wurde kompostiert. Der Kompost wurde über den Winter bis zum Frühjahr des folgenden Jahres ruhengelassen und danach zur Düngung eines für den Kartoffelanbau vorbereiteten Feldes verwendet. Die Kartoffelernte war aufgrund dieser Düngung um 17 % höher als bei einem Vergleichsfeld, wobei besonders beachtenswert war, daß die geernteten Kartoffeln keinen Kartoffelschorf aufwiesen, während die Kartoffeln aus dem Kontrollfeld von dieser Krankheit sehr stark betroffen waren.

### Beispiel 6

Rindergülle mit einem Trockensubstanzgehalt von 7,8 % wurde mit fein dispergierten Tonen in einer Menge von 10 kg/t Gülle vermischt. Das erhaltene Produkt wurde auf ein Gemisch von 65 Teilen zerkleinerte Maisrispen, 25 Teilen Buchenspäne und 10 Teilen Lößboden aufgebracht. Nach Kompostierung des resultierenden Gemischs und Beendigung der Vergärung wurde der erhaltene Kompost zum Düngen von Weinreben verwendet. Der Traubenertrag war gegenüber einem Kontrollweinberg mit der gleichen Rebsorte um 17 % höher.

Das erfindungsgemäße Verfahren ist besonders einfach und in besonders wirtschaftlicher und zugleich besonders umweltschonender Weise anwendbar. Es eignet sich prinzipiell für sämtliche Arten von Abwässern mit anorganischer und organischer Fracht. Die erhaltenen festen Produkte eignen sich in vorteilhafter Weise als Nährböden und Düngemittel, besonders für die Landwirtschaft, und leisten so einen Beitrag zur Erzeugung hochwertiger Nahrungsmittel. Die erhaltenen Produkte können ferner auch in günstiger Weise zur Biogaserzeugung herangezogen werden, und zwar vor oder nach einer Vergärung bzw. Kompostierung, wobei die Biogaserzeugung vorzugsweise unter anaeroben Bedingungen durchgeführt wird.

Da das erfindungsgemäße Verfahren ohne größere Investitionen und zugleich in sehr einfacher Weise großtechnisch durchgeführt werden kann, ist es auch mit entsprechenden wirtschaftlichen Vorteilen verbunden.

## Patentansprüche

1. Verfahren zur Aufbereitung von nichtgereinigten Abwässern, die durch gelöste und/oder dispergierte organische oder anorganische Stoffe verunreinigt sind,
**gekennzeichnet durch**
(A) Vermischen des Abwassers mit einem oder mehreren anorganischen oder organischen thixotropierenden Stoffen, vorzugsweise unter Homogenisierung,
und
(B) Sorption des Gemisches aus Schritt A auf einem anorganischen oder organischen natürlichen oder synthetischen Sorptionsmittel, das von den in Schritt A eingesetzten thixotropierenden mitteln verschieden ist, wobei das Gemisch aus Schritt A in einer massebezogenen Menge von 2 bis 12 Teilen auf 1 Teil des Sorptionsmittels eingesetzt wird.

2. Verfahren nach Anspruch 1,
dadurch gekennzeichnet,
daß die Sorption (B) so durchgeführt wird, daß das Gemisch auf einmal oder in mehreren Teilmengen mit dem Sorptionsmittel in Kontakt gebracht wird.

3. Verfahren nach Anspruch 1 und/oder Anspruch 2,
gekennzeichnet durch
Belüftung des Systems während der Sorption (B) oder zwischen den einzelnen Sorptionsoperationen.

4. Verfahren nach einem oder mehreren der Ansprüche 1 bis 3,
dadurch gekennzeichnet,
daß das Gemisch des aufbereiteten Abwassers aus Schritt A in einer massebezogenen Menge von 8 bis 12 Teilen auf 1 Teil des Sorptionsmittels zur Sorption (B) eingesetzt wird.

5. Verfahren nach einem oder mehreren der Ansprüche 1 bis 4,
gekennzeichnet durch
Zumischen einer Mischkultur von Mikroorganismen, vorzugsweise von Belebtschlamm aus Kläranlagen, in Schritt A.

6. Verfahren nach einem oder mehreren der Ansprüche 1 bis 5,
gekennzeichnet durch
Verwendung von Polysacchariden, Rapsstroh, und/oder deren Derivaten, vorzugsweise von Stärke und/oder Stärkederivaten, von Zellstoffderivaten, wie Carboxymethylcellulose, von Polyacrylsäurederivaten und/oder von Sulfitablaugen und/oder von Bentoniten, Zeolithen, Tonen und/oder Kraftwerksflugaschen als thixotropierende Stoffe in Schritt A.

7. Verfahren nach einem oder mehreren der Ansprüche 1 bis 6,
gekennzeichnet durch
Verwendung von Holzspänen, Rapsstroh, Getreidestroh, Maisstroh, Maisrispen, desintegrierten Holzmassen, Baumrinden, desintegrierten Stadtabfällen, Bentoniten, Zeolithen, Tonen bzw. Lössen und/oder Kraftwerksflugaschen als Sorptionsmittel in Schritt B.

8. Verfahren nach einem oder mehreren der Ansprüche 1 bis 7,
gekennzeichnet durch
aerobe oder anaerobe Fermentation bzw. Vergärung des Gemisches nach Schritt B, vorzugsweise nach Kompostierung

## Claims

1. A method of processing non-purified waste water contaminated with dissolved and/or dispersed organic or inorganic substances, characterised by:
(A) mixing the waste water with one or more inorganic or organic thixotropic substances, preferably with homogenisation,
and
(B) sorption of the mixture from step A on an inorganic or organic natural or synthetic sorption agent which is different from the thixotropic agents used in step A, the mixture from step A being used in a proportion by weight of 2 to 12 parts to one part of the sorption agent.

2. A method according to claim 1, characterised in that sorption B is carried out by contacting the mixture, all at once or in a number of portions, with the sorption agent.

3. A method according to claim 1 and/or claim 2, characterised by aerating the system during sorption (B) or between the individual sorption operations.

4. A method according to one or more of claims 1 to 3, characterised in that the mixture of processed waste water from step A is used in a proportion by weight of 8 to 12 parts per part of sorption agent for sorption B.

5. A method according to one or more of claims 1 to 4, characterised by the addition of a mixed culture of micro-organisms, preferably activated sludge from sewage works, in step A.

6. A method according to one or more of claims 1 to 5, characterised by use of polysaccharides and/or derivatives thereof, preferably starch and/or starch derivatives, cellulose derivatives such as carboxymethyl cellulose, polyacrylic acid derivatives and/or sulphite waste liquors and/or bentonites, zeolites, clays and/or fly ash from power stations as the thixotropic substances in step A.

7. A method according to one or more of claims 1 to 6, characterised by use of wood chips, rape straw, cereal straw, maize straw, maize panicles, disintegrated wood, tree bark, disintegrated town refuse, bentonites, zeolites, clays or loess and/or fly ash from power stations as the sorption agent in step B.

8. A method according to one or more of claims 1 to 7, characterised by aerobic or anaerobic fermentation of the mixture after step B, preferably after composting.

## Revendications

1. Procédé pour le traitement d'eaux usées non purifiées qui sont polluées par des matières organiques ou inorganiques dissoutes et/ou dispersées,
caractérisé par
(A) le mélange des eaux usées avec une ou plusieurs matières organiques ou inorganiques à effet thixotrope, de préférence sous homogénéisation,
et
(B) la sorption du mélange provenant de l'étape (A) sur un sorbant inorganique ou organique, naturel ou synthétique, qui est différent de l'agent à effet thixotrope utilisé dans l'étape (A), le mélange provenant de l'étape (A) étant utilisé dans une quantité rapportée à la masse de 2 à 12 parties sur 1 partie du sorbant.

2. Procédé selon la revendication 1, caractérisé en ce qu'on réalise la sorption (B), de telle sorte qu'on met le mélange en contact avec le sorbant en une fois ou en plusieurs quantités partielles.

3. Procédé selon la revendication 1 et/ou la revendication 2, caractérisé par l'aération du système pendant la sorption (B) ou entre les opérations de sorption individuelles.

4. Procédé selon l'une ou plusieurs quelconques des revendications 1 à 3, caractérisé en ce qu'on utilise le mélange des eaux usées traitées provenant de l'étape (A) dans une quantité rapportée à la masse de 8 à 12 parties sur 1 partie du sorbant pour la sorption (B).

5. Procédé selon l'une ou plusieurs quelconques des revendications 1 à 4, caractérisé par le mélange d'une culture mixte de micro-organismes, de préférence de boue activée provenant de stations d'épuration, dans l'étape (A).

6. Procédé selon l'une ou plusieurs quelconques des revendications 1 à 5, caractérisé par l'utilisation de polysaccharides et/ou de leurs dérivés, de préférence d'amidon et/ou de dérivés de l'amidon, de dérivés de pâte de cellulose comme la carboxyméthylcellulose, de dérivés de l'acide polyacrylique et/ou de lessives de sulfite usées et/ou de bentonites, de zéolithes, d'argiles et/ou de cendres volantes de centrales électriques en tant que matières à effet thixotrope dans l'étape (A).

7. Procédé selon l'une ou plusieurs quelconques des revendications 1 à 6, caractérisé par l'utilisation de copeaux de bois, de paille de colza, de paille de céréales, de paille de maïs, de panicules de maïs, de compositions de bois décomposées, d'écorces d'arbres, de déchets municipaux décomposés, de bentonites, de zéolithes, d'argiles ou de limons et/ou de cendres volantes de centrales électriques en tant que sorbant dans l'étape (B).

8. Procédé selon l'une ou plusieurs quelconques des revendications 1 à 7, caractérisé par la fermentation aérobie ou anaérobie du mélange après l'étape (B), de préférence après compostage.
